# EUROPEAN PATENT APPLICATION

(11) **EP 1 791 210 A2**
(43) Date of publication of application: **30.05.2007**
(21) Application number: 06019708.4
(22) Date of filing: 20.09.2006
(51) Int. Cl.: H01M 8/06, H01M 8/04

(54) **Hydrogen storage system for a fuel cell system**

(30) Priority: 29.11.2005 KR 20050115145
(71) Applicant: LG Electronics Inc., Yongdungpo-Gu Seoul 150-010 (KR); LG Chem, Ltd., 150-010 Seoul (KR)
(72) Inventor: Kim, Ki-Dong, Gimpo Gyeonggi-do (KR); Lee, Hyun-Jae, Seoul (KR)
(74) Representative: TER MEER - STEINMEISTER & PARTNER GbR

(57) **Abstract**

A fuel cell system is disclosed. The fuel cell system includes a stack unit including a fuel electrode and an air electrode and generating electricity by an electrochemical reaction between hydrogen and oxygen; a fuel supply unit supplying hydrogen to the fuel electrode of the stack unit; an air supply unit supplying the air to the air electrode of the stack unit; and a residual gas storage unit storing residual hydrogen exhausted from the stack unit or the fuel supply unit and then supplying the residual hydrogen to the stack unit again or to another system requiring hydrogen. The residual gas storage unit of the fuel cell system allows residual hydrogen to re-supplied to the stack unit if necessary, so that a waste of raw materials for generating hydrogen can be reduced and thus a cost can be reduced.

## Description

### RELATED APPLICATION

The present disclosure relates to subject matter contained in priority Korean Application No. 10-2005-0115145, filed on November 29, 2005, which is herein expressly incorporated by reference in its entirety.

### BACKGROUND OF THE INVENTION

### 1. Field of the Invention

The present invention relates to a fuel cell system, and more particularly, to a fuel cell system that includes a residual gas storage unit storing residual hydrogen exhausted from a stack unit or a fuel supply unit and then supplying the stored residual hydrogen to the stack unit again or to another system requiring hydrogen.

### 2. Description of the Background Art

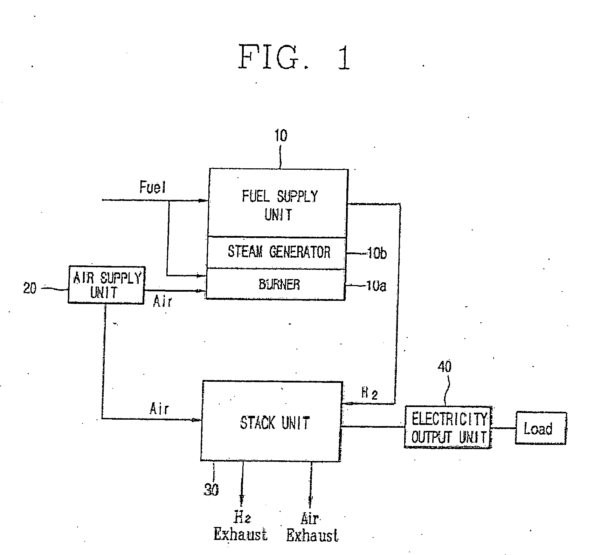

Figure 1 is a schematic view illustrating a conventional PEMEF (proton exchange membrane fuel cell) type fuel cell system (hereinafter, referred to as a fuel cell system), in which a desulfurizing process, a reforming reaction and a hydrogen purifying process are performed on a hydrocarbon-based (CH-based) fuel such as LNG, LPG, CH₃OH, gasoline, or the like to purify and use only hydrogen (H₂) as a fuel.

As illustrated in Figure 1, the conventional fuel cell system includes a fuel supply unit 10 extracting only hydrogen (H₂) from LNG and supplying extracted hydrogen to a stack unit 30, an air supply unit 20 supplying the air to the stack unit 30 and the fuel supply unit 10, the stack unit 30 generating electricity using supplied hydrogen (H₂) and the air, and an electricity output unit 40 converting electricity generated by the stack unit 30 into an alternating current (AC) and supplying the AC to a load.

In the fuel supply unit 10, hydrogen is generated by a reforming reaction between fuel and vapor. To generate vapor required for the reforming reaction, the fuel supply unit 10 includes a steam generator 10b, and a burner 10a supplying heat needed by the steam generator 10b.

Hydrogen supplied to the stack unit 30 from the fuel supply unit 10 may not react with the air one hundred percent but remain according to the current amount required by a consumer. The residual hydrogen left in the fuel supply unit 10 or the stack unit 30 is being discarded in the conventional fuel cell system.

Consequently, even if hydrogen is required as much as the residual hydrogen having been discarded, there is no way to reuse the discarded hydrogen. For this reason, hydrogen should be newly generated as much as required, causing a waste of additional raw materials and an increase in cost.

### BRIEF DESCRIPTION OF THE INVENTION

Therefore, an object of the present invention is to provide a fuel cell system capable of re-supplying residual hydrogen to a stack unit.

Another object of the present invention is to provide a fuel cell system capable of supplying residual hydrogen to another system requiring hydrogen.

To achieve these and other advantages and in accordance with the purpose of the present invention, as embodied and broadly described herein, there is provided a fuel cell system including: a stack unit including a fuel electrode and an air electrode and generating electricity by an electrochemical reaction between hydrogen and oxygen; a fuel supply unit supplying hydrogen to the fuel electrode of the stack unit; an air supply unit supplying the air to the air electrode of the stack unit; and a residual gas storage unit storing residual hydrogen exhausted from the stack unit or the fuel supply unit and then supplying the residual hydrogen to the stack unit again or to another system requiring hydrogen.

The foregoing and other objects, features, aspects and advantages of the present invention will become more apparent from the following detailed description of the present invention when taken in conjunction with the accompanying drawings.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
Figure 1 is a schematic view of a conventional fuel cell system;
Figure 2 is a block diagram of a fuel cell system according to a first embodiment of the present invention;
Figure 3 is a schematic view showing relations between a reformer, a stack unit and a residual gas storage unit of Figure 2;
Figure 4 is a view showing a configuration of the residual gas storage unit of Figure 3;
Figure 5 is a view showing that a hydrogen storage chamber and a carbon monoxide collecting chamber are disposed in different order from that illustrated in Figure 4;
Figure 6 is a schematic view showing relations between a reformer, a stack unit, and a storage gas storage unit of a fuel cell system according to a second embodiment of the present invention; and
Figure 7 is a view showing a configuration of the residual gas storage unit of Figure 6.

### DETAILED DESCRIPTION OF THE INVENTION

Reference will now be made in detail to the preferred embodiments of the present invention, examples of which are illustrated in the accompanying drawings.

A fuel cell system according to the first embodiment of the present invention will now be described in detail with reference to accompanying drawings.

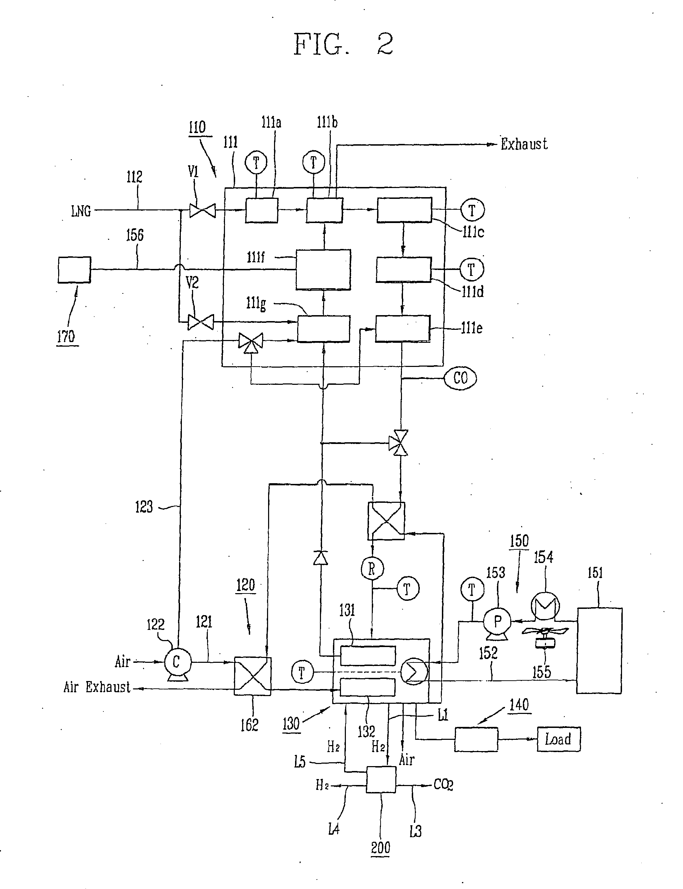

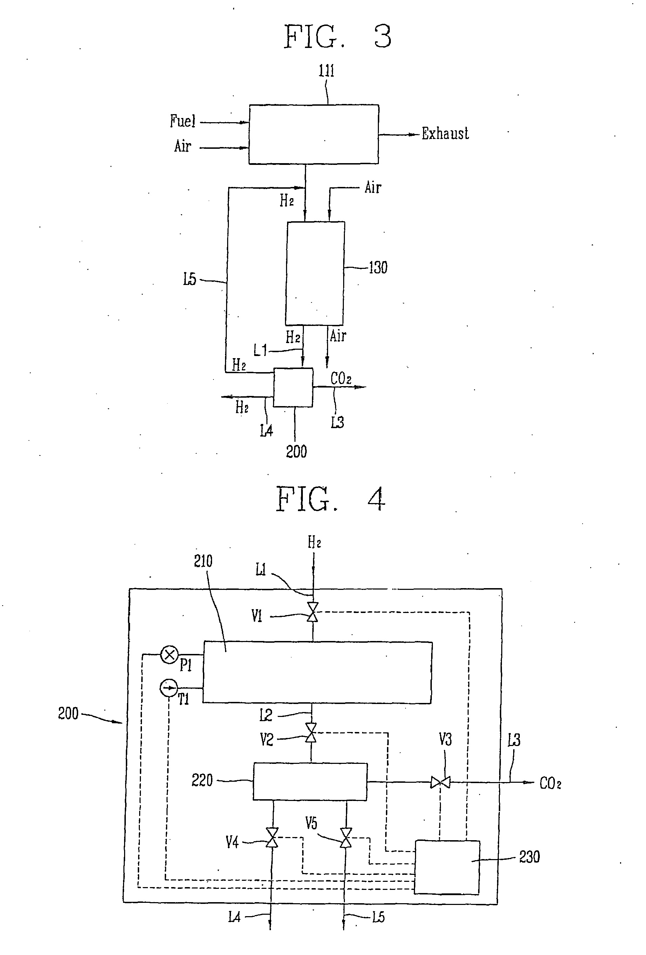

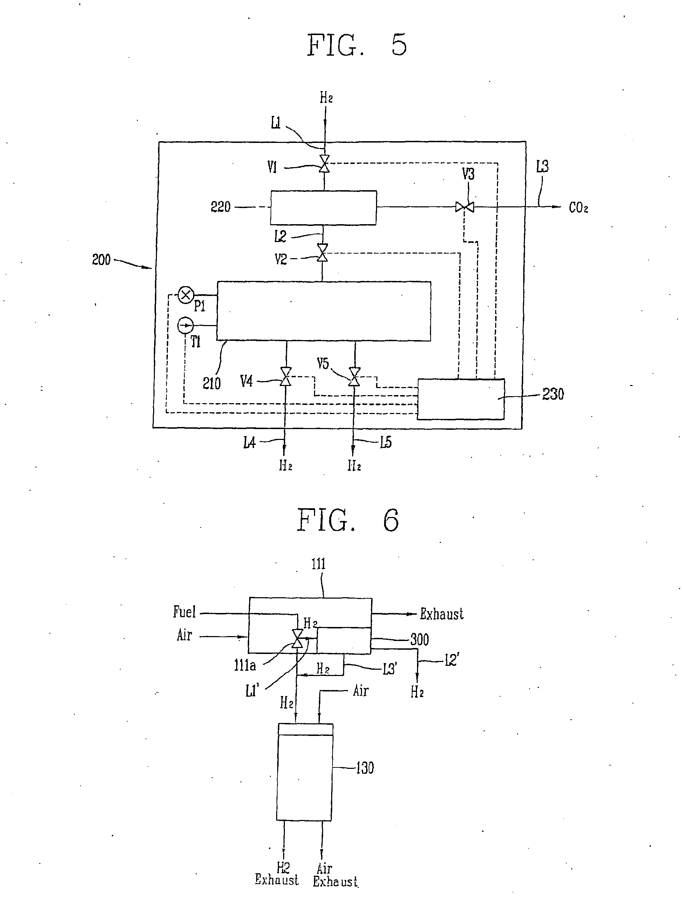

Figure 1 is a schematic view of a conventional fuel cell system, Figure 2 is a block diagram of a fuel cell system according to the first embodiment of the present invention, and Figure 3 is a schematic view showing relations between a reformer, a stack unit and a residual gas storage unit of Figure 2. Figure 4 is a view showing a configuration of the residual gas storage unit of Figure 3, and Figure 5 is a view showing that a hydrogen storage chamber and a carbon monoxide collecting chamber are disposed in different order from that of Figure 4. In reference, a solid line represents a pipe, and a dotted line represents a line.

Referring to Figure 2, the fuel cell system according to the first embodiment of the present invention includes a fuel supply unit 110, an air supply unit 120, a stack unit 130, an electricity output unit 140, a water supply unit 150, a hot water supply unit 170, and a residual gas storage unit 200.

The fuel supply unit 110 includes a reformer 111 purifying hydrogen (H₂) from LNG and supplying the hydrogen to a fuel electrode 131 of the stack unit 130, and a pipe 112 supplying LNG to the reformer 111. The reformer 111 includes a desulfurization reactor 111a removing sulfur from a fuel, a reforming reactor 111b generating hydrogen by a reforming reaction between fuel and vapor, a high temperature water reactor 111c and a low temperature reactor 111d additionally generating hydrogen by making carbon monoxide, which is generated via the reforming reactor 111b, react again, a partial oxidation reactor 111e purifying hydrogen by removing carbon monoxide contained in a fuel using the air as a catalyzer, a steam generator 111f supplying vapor to the reforming reactor 111b, and a burner 111g supplying heat required by the steam generator 111f.

The air supply unit 120 includes first and second supply lines 121 and 123, and an air supply fan 122. The first air supply line 121 is installed between the air supply fan 122 and a second preheater 162 in order to supply the air to an air electrode 132. The second air supply line 123 is installed between the air supply fan 122 and the burner 111g to supply the air to the burner 111g.

The stack unit 130 includes the fuel electrode 131 and the air electrode 132 to simultaneously generate electrical energy and thermal energy by an electrochemical reaction between hydrogen and oxygen that are supplied, respectively, from the fuel supply unit 110 and the air supply unit 120.

The electricity output unit 140 converts electrical energy generated in the stack unit 130 into an alternating current (AC) and supplies the AC to a load.

The water supply unit 150 supplies water to the stack unit 130 of the fuel supply unit 110 to cool the stack unit 130. The water supply unit 150 includes a water supply container 151 filled with a predetermined amount of water, a water circulation line 152 circulatively connecting the stack unit 130 with the water supply container 151, a water circulation pump 153 installed in the middle of the water circulation line 152 and pumping water within the water supply container 151, and a heat exchanger 154 and a cooling fan 155 provided in the middle of the water circulation line 152 and cooling water being circulatively supplied.

The hot water supply unit 170 supplies stored hot water to the steam generator 111f through a pipe 156.

Referring to Figures 2 and 3, the residual gas storage unit 200 is installed on a residual gas exhaust line of the stack unit 130, that is, on a first line (L1), stores residual hydrogen that is discarded from the stack unit 130 for not reacting with the air therein, and supplies such hydrogen to the stack unit 130 again or to another system requiring hydrogen. Here, another system refers to a boiler for home use and a hydrogen car that require hydrogen as a fuel. Because such residual hydrogen can be supplied to another system, the application field of the fuel cell system may expand.

Referring to Figure 4, the residual gas storage unit 200 includes a hydrogen storage chamber 210 storing residual hydrogen exhausted from the stack unit 130, a carbon monoxide collecting chamber 220 collecting carbon monoxide (CO) contained in hydrogen exhausted from the hydrogen storage chamber 210, a plurality of valves (V1, V2, V3, V4 and V5) installed on inlet/outlet lines (L1, L2, L3, L4 and L5) of the hydrogen storage chamber 210 and the carbon monoxide collecting chamber 220 and opened and closed to control inflow/outflow of hydrogen and carbon dioxide (CO₂), and a controller 230 controlling opening and closing of the valves (V1, V2, V3, V4 and V5).

A temperature sensor (T1) and a pressure sensor (P1) are installed at the hydrogen storage chamber 210 in order to measure a temperature and pressure of hydrogen stored in the hydrogen storage chamber 210.

A carbon monoxide collecting filter is included in the carbon monoxide collecting chamber 220 and collects carbon monoxide contained in hydrogen.

The valves (V1, V2, V3, V4 and V5) include a first valve(V1) installed on a first line (L1) connecting the stack unit 130 with the hydrogen storage chamber 210, a second valve(V2) installed on a second line (L2) connecting the hydrogen storage chamber 210 with the carbon monoxide collecting chamber 220, a third valve (V3) installed on the third line (L3) through which a fine gas from which carbon monoxide has been removed is exhausted to the outside, a fourth valve (V4) installed on a fourth line (L4) through which hydrogen stored in the hydrogen storage chamber 210 is supplied to another system, and a fifth valve (V5) installed on a fifth line (L5) through which hydrogen stored in the hydrogen storage chamber 210 is supplied to the stack unit 130.

The controller 230 receives a temperature or pressure of hydrogen stored in the hydrogen storage chamber 210 in the form of signal from the temperature sensor (T1) or the pressure sensor (P1). When the temperature of hydrogen stored in the hydrogen storage chamber 210 is the same as or higher than a reference temperature or when the pressure of hydrogen is the same as or greater than reference pressure, the controller 230 opens the fifth valve (V5) to supply hydrogen to the stack unit 130 through the fifth line (L5). Also, the third valve(V3) is opened so as to allow a fine gas (CO₂, or the like) from which carbon monoxide has been removed to be exhausted to the outside through the third line (L3). The controller 230 properly controls the first, second, third and fourth valves (V1, V2, V3 and V4) according to the temperature or pressure of the hydrogen stored in the hydrogen storage chamber 210.

Of course, programming may be performed by software instead of using the temperature sensor (T1) and the pressure sensor (P1) such that when a predetermined time elapses, the controller 230 may open the fifth valve (V5) to supply hydrogen to the stack unit 130 through the fifth line (L5). Also, the residual gas storage unit 200 does not have to include the aforementioned controller 230, and a central controller (not shown) of the fuel cell system, not the separate controller 230, may directly control the residual gas storage unit 200.

Of course, as illustrated in Figure 5, the residual gas storage unit 200 may be constructed with the disposition order of the hydrogen storage chamber 210 and the carbon monoxide collecting chamber 220 switched. In this case, the residual gas exhausted from the stack unit 130 passes first through the carbon monoxide collecting chamber 220, and then flows into the hydrogen storage chamber 210. In this case, the first line (L1) connects the stack unit 130 with the carbon monoxide collecting chamber 220. Remaining other structures are the same as those described above, the description thereon will be omitted.

Referring to Figures 2 to 4, operations and effects of the fuel cell system according to the first embodiment of the present invention will now be described.

Referring to Figure 2, the fuel supply unit 110 reforms LNG and vapor in the reformer 111 to thus generate hydrogen, and then supplies the hydrogen to the fuel electrode 131 of the stack unit 130. The air supply unit 120 supplies the air to the air electrode 132 of the stack unit 130. The stack unit 130 generates electricity by an electrochemical reaction between the supplied hydrogen and the air. The generated electricity is converted into an alternating current (AC) in the electricity output unit 150, and the AC is supplied to electrical appliances (illustrated as 'Load' on the drawing).

Referring to Figures 3 and 4, residual hydrogen, which is exhausted because hydrogen does not react with the air one hundred percent, is stored in the hydrogen storage chamber 210 of the residual gas storage unit 200 via the first line (L1) when the first valve (V1) is opened. The controller 230 of the residual gas storage unit 200 receives a temperature or pressure of the hydrogen stored in the hydrogen storage chamber 210 in the form of a signal from the temperature sensor (T1) or the pressure sensor (P1). When the received temperature or pressure is the same as or greater than a predetermined temperature or pressure, the controller 230 opens the fifth valve (V5) to supply hydrogen to the stack unit 130 through the fifth line (L5).

Accordingly, the residual hydrogen can be re-supplied to the stack unit 130 if necessary, so that a waste of raw materials for generating hydrogen can be reduced and thus a cost can be reduced. Also, hydrogen may be supplied to another system requiring hydrogen through the fourth line (L4) by opening the fourth valve (V4) if necessary, so that the application field of the fuel cell system can expand.

Hereinafter, a fuel cell system according to the second embodiment of the present invention will now be described in detail with reference to accompanying drawings. The same reference numerals are designated to the same constructions as those of the first embodiment, and the detailed description thereon will be omitted.

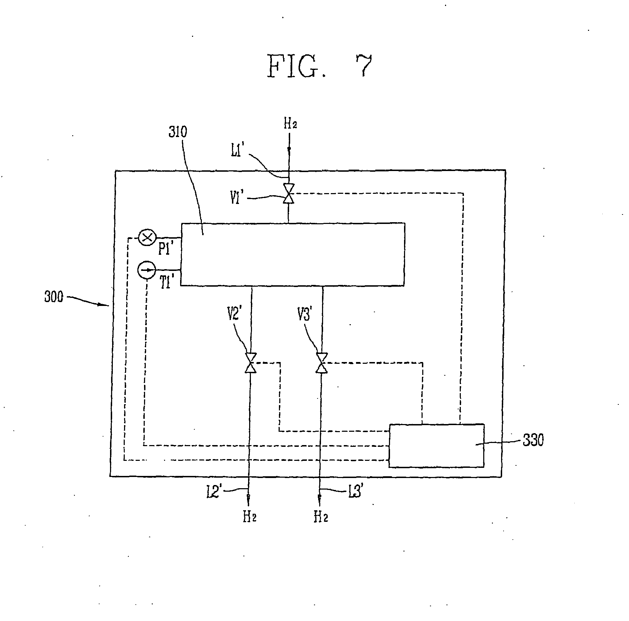

Figure 6 is a schematic view showing relations between a reformer, a stack unit and a residual gas storage unit of the fuel cell system according to the second embodiment of the present invention, and Figure 7 is a view illustrating a construction of the residual gas storage unit of Figure 6.

A residual gas storage unit 300 according to the second embodiment is installed on a residual hydrogen exhaust line within a reformer 111 of a fuel supply unit 110, that is, on a first line (L1'). Thus, residual gas hydrogen of the second embodiment contains less carbon monoxide (CO) than the residual gas of the first embodiment, which remains after the reaction with the air in the stack unit 130. For this reason, there is no need to install the carbon monoxide collecting chamber 220 of Figure 4 of the first embodiment. Also, because only very small amount of hydrogen remains after reaction in the stack unit 130, the residual hydrogen does not recovered but is exhausted to the outside together with the air.

Referring to Figures 6 and 7, the residual gas storage unit 300 includes a hydrogen storage chamber 310 storing residual hydrogen exhausted from the stack unit 130, a plurality of valves (V1', V2' and V3') installed on inlet/outlet lines (L1', L2' and L3') of the hydrogen storage chamber 310 and opened and closed to control the inflow/outflow of hydrogen, and a controller 330 controlling opening and closing of the valves (V1', V2' and V3').

A temperature sensor (T1') and a pressure sensor (P1') are installed at the hydrogen storage chamber 310 to measure a temperature and pressure of residual hydrogen stored in the hydrogen storage chamber 310.

The valves (V1', V2' and V3') include a first valve (V1') installed on a first line (L1') connecting the stack unit 130 with the hydrogen storage chamber 310, a second valve (V2') installed on a second line (L2') through which hydrogen stored in the hydrogen storage chamber 310 is supplied to another system, and a third valve (V3') installed on a third line (L3') through which hydrogen stored in the hydrogen storage chamber 310 is supplied to the stack unit 130.

The controller 330 receives a temperature or pressure of hydrogen stored in the hydrogen storage chamber 310 in the form of a signal from the temperature sensor (T1') and the pressure sensor (P1'). When the temperature of the hydrogen stored in the hydrogen storage chamber 310 is the same as or higher than a reference temperature or the pressure of the hydrogen is the same as or greater than reference pressure, the controller 330 opens the third valve (V3') to supply hydrogen to the stack unit 130 through the third line (L3'). The controller 330 properly controls the first and second valves (V1' and V2') according to the temperature or the pressure of the hydrogen stored in the hydrogen storage chamber 310.

Of course, programming may be performed by software instead of using the temperature sensor (T1') and the pressure sensor (P1') such that when a predetermined time elapses, the controller 330 may open the third valve (V3') to supply hydrogen to the stack unit 130 through the third line (L3'). Also, the residual gas storage unit 300 does not have to include the aforementioned controller 330, and a central controller (not shown) of the fuel cell system, not the separate controller 330, may directly control the residual gas storage unit 300.

Referring to Figures 6 and 7, operations and effects of the residual gas storage unit according to the second embodiment of the present invention will now be described.

Referring to Figures 6 and 7, residual hydrogen exceeding the required amount is introduced into the residual gas storage unit 300 via a three way valve 111a and the first line (L1'). The residual hydrogen introduced into the residual gas storage unit 300 is stored in the hydrogen storage chamber 310 when the first valve (V1') is opened.

The controller 330 of the residual gas storage unit 300 receives a temperature or pressure of the hydrogen stored in the hydrogen storage chamber 310 in the form of a signal from the temperature sensor (T1') or the pressure sensor (P1'). When the received temperature or pressure is same as or greater than a predetermined temperature or pressure, the controller 330 opens the third valve (V3') to supply hydrogen to the stack unit 130 through the third line (L3').

Accordingly, the residual hydrogen can be re-supplied to the stack unit 130 if necessary, so that a waste of raw materials for generating hydrogen can be reduced, and thus a cost can be reduced. Also, hydrogen may be supplied to another system requiring hydrogen through the second line (L2') by opening the second valve (V2') if necessary, so that the application field of the fuel cell system can expand. Besides, because the residual gas storage unit 30 is installed in the reformer having the inside at a high temperature, residual hydrogen whose temperature has been raised is introduced to the stack unit 130, thereby desirably eliminating needs for a separate temperature raising process.

Also, because such residual hydrogen contains less carbon monoxide (CO) than residual hydrogen remaining after a reaction with the air in the stack unit 130, there is no need to install the carbon monoxide collecting chamber 220, thereby reducing a coast.

As described so far, a fuel cell system having a residual gas storage unit according to the present invention has the following advantages.

First, residual hydrogen discarded from a stack unit can be stored and re-supplied to the stack unit if necessary, so that a waste raw materials for generating hydrogen is reduced, and thus a cost is reduced.

Secondly, residual hydrogen stored in a residual gas storage unit may be supplied to another system requiring hydrogen, which expands the application range of the fuel cell system.

Thirdly, when the residual gas storage unit is stored within a reformer that is at a high temperature, residual hydrogen whose temperature has already been raised can be introduced to the stack unit, thereby eliminating a need to perform a temperature raising process.

Fourthly, when the residual gas storage unit is installed in the reformer, residual hydrogen contains less carbon monoxide than residual hydrogen remaining after a reaction with the air in the stack unit. Accordingly, a carbon monoxide collecting chamber is not needed, and thus a cost can be saved.

As the present invention may be embodied in several forms without departing from the spirit or essential characteristics thereof, it should also be understood that the above-described embodiments are not limited by any of the details of the foregoing description, unless otherwise specified, but rather should be construed broadly within its spirit and scope as defined in the appended claims, and therefore all changes and modifications that fall within the metes and bounds of the claims, or equivalents of such metes and bounds are therefore intended to be embraced by the appended claims.

## Claims

1. A fuel cell system comprising:
a stack unit including a fuel electrode and an air electrode and generating electricity by an electrochemical reaction between hydrogen and oxygen;
a fuel supply unit supplying hydrogen to the fuel electrode of the stack unit;
an air supply unit supplying the air to the air electrode of the stack unit; and
a residual gas storage unit storing residual hydrogen exhausted from the stack unit or the fuel supply unit and then supplying the residual hydrogen to the stack unit again or to another system requiring hydrogen.

2. The fuel cell system of claim 1, wherein the residual gas storage unit is installed on a residual hydrogen exhaust line of the stack unit.

3. The fuel cell system of claim 1, wherein the residual gas storage unit comprises:
a hydrogen storage chamber storing residual hydrogen exhausted from the stack unit;
a carbon monoxide collecting chamber collecting carbon monoxide contained in residual hydrogen exhausted from the hydrogen storage chamber; and
a plurality of valves installed on inlet/outlet lines of the hydrogen storage chamber and the carbon monoxide collecting chamber.

4. The fuel cell system of claim 1, wherein the residual gas storage unit comprises:
a carbon monoxide collecting chamber collecting carbon monoxide contained in residual hydrogen exhausted from the stack unit;
a hydrogen storage chamber storing residual hydrogen from which carbon monoxide exhausted from the carbon monoxide collecting chamber has been removed; and
a plurality of valves installed on inlet/outlet lines of the hydrogen storage chamber and the carbon monoxide collecting chamber.

5. The fuel cell system of claim 3 or 4, the residual gas storage unit further comprises:
a controller opening and closing the valves; and
a pressure sensor and a temperature sensor measuring pressure and temperature of residual hydrogen stored in the hydrogen storage chamber.

6. The fuel cell system of claim 1, wherein the residual gas storage unit is installed on a residual hydrogen exhaust line in the fuel supply unit.

7. The fuel cell system of claim 1, wherein the residual gas storage unit comprises:
a hydrogen storage chamber storing residual gas remaining after being generated from the fuel supply unit; and
a plurality of valves installed on inlet/outlet lines of the hydrogen storage chamber.

8. The fuel cell system of claim 7, wherein the residual gas storage unit further comprises:
a controller opening and closing the valves; and
a pressure sensor and a temperature sensor measuring pressure and temperature of residual hydrogen stored in the hydrogen storage chamber.
